# EUROPÄISCHE PATENTSCHRIFT

(11) **EP 1 036 688 B1**
(45) Veröffentlichungstag und Bekanntmachung des Hinweises auf die Patenterteilung: **05.04.2006**
(21) Anmeldenummer: 00100627.9
(22) Anmeldetag: 13.01.2000
(51) Int. Cl.: B60J 10/12, B60J 7/02

(54) **Kraftfahrzeug, insbesondere Personenkraftwagen**
Motor vehicle, particularly passenger vehicle
Véhicule automobile en particulier véhicule de passagers

(30) Priorität: 18.03.1999 DE 19912106
(43) Veröffentlichungstag der Anmeldung: 20.09.2000
(73) Patentinhaber: Dr.Ing. h.c.F. Porsche Aktiengesellschaft, 70435 Stuttgart (DE)
(72) Erfinder: Nabert, Bernd, 72296 Schopfloch (DE); Lutz, Erwin, 71701 Schwieberdingen (DE); Zierle, Matthias, 70771 Leinfelden-Echterdingen (DE); Diehm, Frank, 74366 Kirchheim (DE)

(56) Entgegenhaltungen:
- DE-A- 19 515 412
- DE-A- 19 702 336
- DE-C- 4 142 264
- FR-A- 2 564 789
- US-A- 5 052 744

## Beschreibung

Die Erfindung bezieht sich auf ein Kraftfahrzeug, insbesondere Personenkraftwagen mit wenigstens einem großflächigen bewegbaren Dachteil gemäß dem Oberbegriff des Patentanspruchs 1.

Aus der DE 196 13 761 C1 geht ein Kraftfahrzeug, insbesondere Personenkraftwagen, mit wenigstens einem großflächigen bewegbaren Dachteil hervor, das an seitlich einer Dachöffnung angeordneten langgestreckten Führungsschienen längsverschiebbar geführt ist. Die Führungsschienen und die angrenzenden seitlich außenliegenden Dachholme sind zum Fahrgastraum hin durch eine vorgelagerte Verkleidung (Festhimmel) abgedeckt. Bei dieser Anordnung können unter ungünstigen Bedingungen bei einem seitlichen Aufprall des Kopfes eines Fahrzeuginsassen gegen die Verkleidung bzw. gegen die Führungsschiene und/oder den Dachholm relativ schwere Verletzungen des Kopfes auftreten.

Ein Kraftfahrzeug, das die Merkmale das Oberbegriffs des Anspruchs 1 aufweist, ist aus der FR 2 564 789 A1 bekannt.

Der Erfindung liegt daher die Aufgabe zugrunde, bei einem Kraftfahrzeug der eingangs genannten Gattung solche Vorkehrungen zu treffen, daß die beim Aufprall eines Kopfes eines Fahrzeuginsassen auftretenden Kräfte erheblich reduziert werden, um das Verletzungsrisiko zu verringern. Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das Zwischenschalten eines Deformationselementes, welches zumindest einen Teilbereich der Verkleidung trägt, die bei einem Kopfaufprall auftretenden Kräfte durch die Verformungsarbeit des Deformationselementes erheblich reduziert werden. Das durch ein dünnwandiges Strangpreßprofil gebildete Deformationselement läßt sich einfach und kostengünstig fertigen und schnell montieren. Durch die Anbindung des Deformationselementes an die Führungsschienen kann das Deformationselement bereits außerhalb des Fahrzeugs mit dem vorgefertigten Dachmodul verbunden werden, wodurch die Montagezeit am Fahrzeugband erheblich verringert wird.

Ein Ausführungsbeispiel der Erfindung ist in den Zeichnungen dargestellt und wird im folgenden näher beschrieben:

Es zeigen
- Fig. 1: eine perspektivische Ansicht von schräg hinten auf einen Personenkraftwagen mit einem öffnungsfähigen Fahrzeugdach, wobei ein bewegbares Dachteil eine teilweise zurückgeschobene Stellung einnimmt und sich eine Heckklappe in einer hochgeschwenkten Zwischenstellung befindet.
- Fig. 2: einen Schnitt nach der Linie II-II der Fig. 1 in größerer Darstellung einer ersten Ausführungsform eines Deformationselementes
- Fig. 3: einen Schnitt ähnlich Fig. 2 einer zweiten Ausführungsform des Deformationselementes in größerem Maßstab
- Fig. 4: einen Schnitt ähnlich Fig. 2 einer dritten Ausführungsform des Deformationselementes in größerem Maßstab.

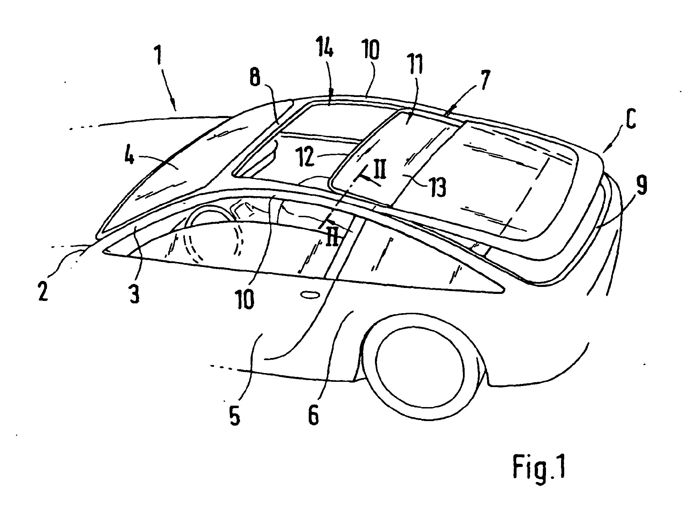

Das in Figur 1 dargestellte, durch einen Personenkraftwagen gebildete Kraftfahrzeug 1 weist einen Aufbau 2 auf, der sich aus einer in einem Windschutzscheibenrahmen 3 aufgenommenen Windschutzscheibe 4, seitlichen Türen 5, hinteren Seitenteilen 6 und einem öffnungsfähigen Fahrzeugdach 7 zusammensetzt.

Das öffnungsfähige Fahrzeugdach 7 wird vorne durch den oberen querverlaufenden Abschnitt 8 des Windschutzscheibenrahmens 3, hinten durch einen Heckquerträger 9 und an beiden Längsseiten durch seitlich außenliegende, aufbauseitige Dachholme 10 begrenzt.

Gemäß Figur 1 umfaßt das Fahrzeugdach 7 wenigstens einen großflächigen bewegbaren vorderen Dachteil 11, der ausgehend von seiner nicht näher gezeigten Schließstellung A nach hinten unter eine schwenkbare Heckklappe bewegbar ist und umgekehrt. In Figur 1 ist das vordere Dachteil 11 in einer teilweise zurückgeschobenen Stellung gezeigt und die Heckklappe nimmt eine hochgeschwenkte Zwischenstellung C ein.

Das bewegbare Dachteil 11 wird im Ausführungsbeispiel durch einen mit einem randseitigen Rahmen 12 versehenen Glasdeckel 13 gebildet. Es können auch zwei oder mehrere bewegbare Dachteile vorgesehen sein.

Zur Verstellbewegung des Dachteiles 11 sind an beiden seitlichen Bereichen einer Dachöffnung 14 jeweils langgestreckte, profilierte Führungsschienen 15 vorgesehen, die entweder direkt oder indirekt an die weiter außenliegenden seitlichen Dachholme 10 angebunden sind. Zu einem Fahrgastraum 16 hin sind sowohl die Dachholme 10 als auch die Führungsschienen 15 durch eine Verkleidung 17 (Himmel) abgedeckt. Damit bei einem seitlichen Kopfaufschlag das Verletzungsrisiko für einen Fahrzeuginsassen wesentlich reduziert wird, ist erfindungsgemäß vorgesehen, daß die Verkleidung 17 zumindest bereichsweise einem zwischengeschalteten Deformationselement 18 zugeordnet ist, welches an der Führungsschiene 15 festlegbar ist. Die komplette Verkleidung 17 oder zumindest ein Teilbereich der Verkleidung ist dem Deformationselement 18 zugeordnet.

Das Deformationselement 18 wird durch ein dünnwandiges Strangpreßprofil 19 aus einer Leichtmetallegierung (z.B. AIMGSI 0,5) gebildet. Im Ausführungsbeispiel ist das Strangpreßprofil 19 nach oben hin abschnittsweise offen ausgebildet und bildet in montiertem Zustand zusammen mit Bereichen der Führungsschiene 15 ein geschlossenes Hohlprofil 20.

Das Deformationselement 18 ist auf der dem Fahrgastraum 16 zugekehrten Seite mit einem dekorativen Bezug 21 aus einer TPO-Folie, Leder oder dgl. versehen. Die den Bezug 21 tragenden Abschnitte des Deformationselementes 18 und der Bezug 21 bilden einen Teilbereich der Verkleidung 17.

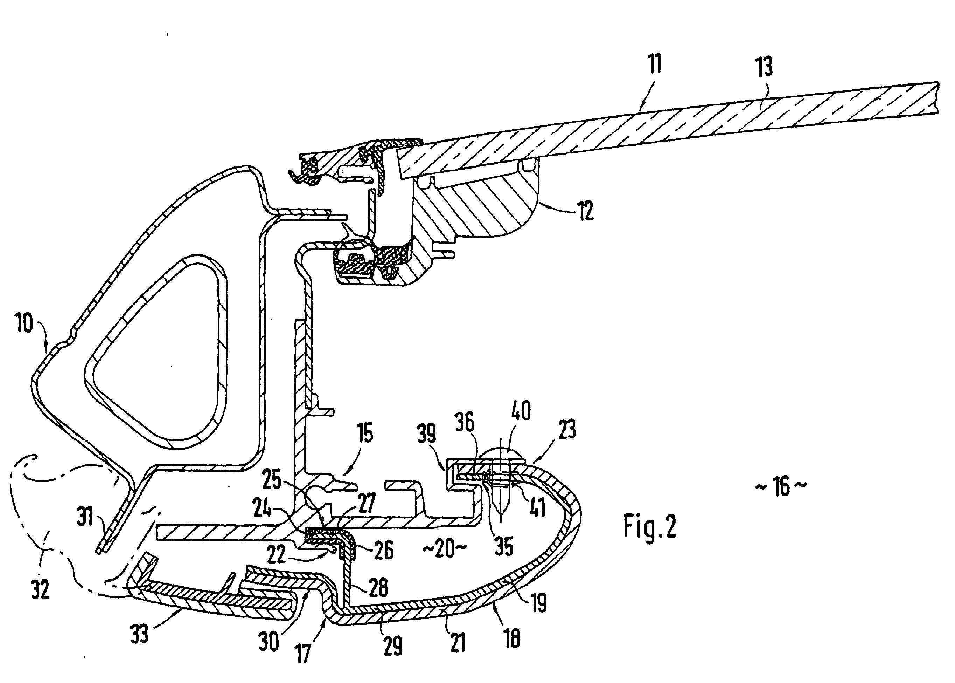

Gemäß den Fig. 2 bis 4 ist das Deformationselement 18 an zumindest zwei beabstandet angeordneten Befestigungsabschnitten 22,23 mit der Führungsschiene 15 verbindbar.

Das Deformationselement 18 weist auf der dem angrenzenden Dachholm 10 zugewandten Seite einen nach oben und außen gerichteten ersten Befestigungsabschnitt 22 auf, wobei das freie Ende 24 des nach außen gerichteten Schenkels 25 unter Zwischenschaltung zumindest eines elastischen Elementes 26 seitlich in eine etwa u-förmige, einseitig offene Aufnahme 27 der Führungsschiene 15 eingesteckt ist. Der erste Befestigungsabschnitt 22 des Deformationselementes 18 ist im Querschnitt gesehen etwa L-förmig profiliert, wobei das freie Ende des längeren Schenkels 28 an eine untere Begrenzungswand 29 des Deformationselementes 18 herangeführt ist. Angrenzend an den ersten Befestigungsabschnitt 22 ist das Deformationselement 18 und die integrierte Verkleidung 17 nach oben und zur Außenseite hin abgestellt. Zwischen dieser Abstellung 30 und einem auf einen Flansch 31 des Dachholmes 10 aufgesteckten Dichtkörper 32 ist eine schmale Leiste 33 zwischengeschaltet, die örtlich über nicht näher dargestellte Befestigungsmittel an der Abstellung 30 oder am Dachholm 10 in Lage gehalten ist. Die Leiste 33 bildet einen Teilbereich der Verkleidung 17.

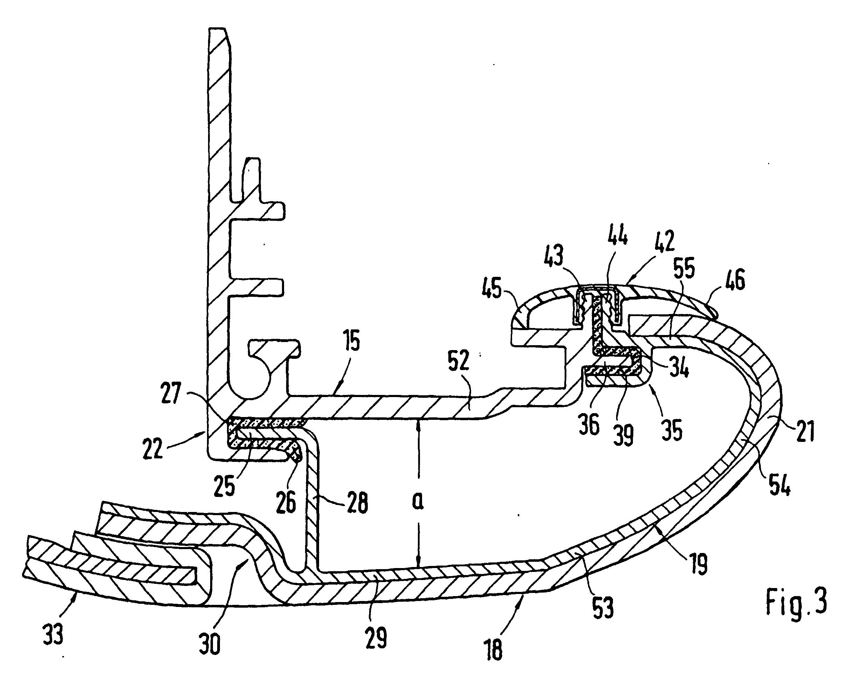

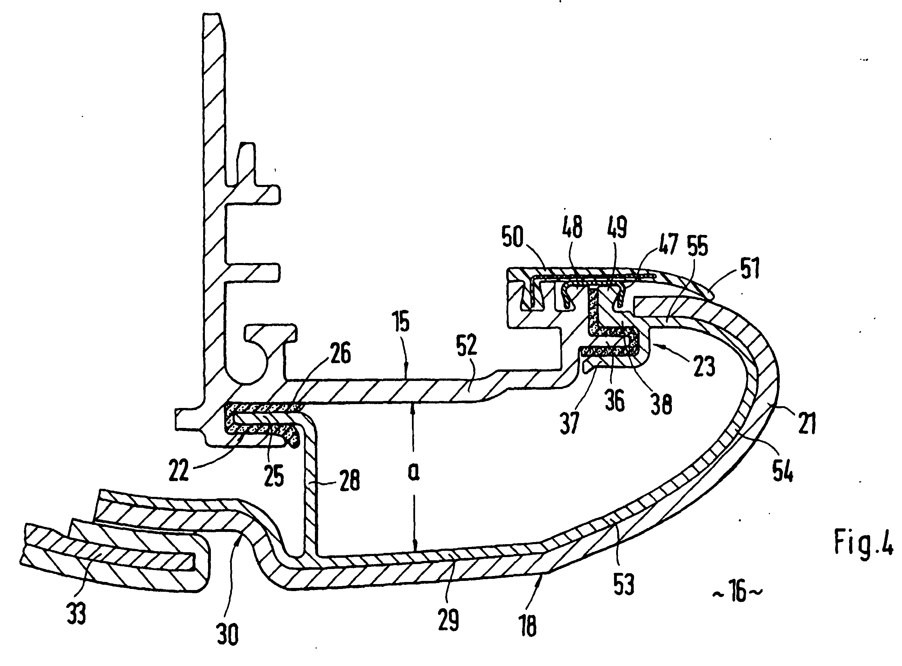

Am freien oberen Ende des Deformationselementes 18 ist der zweite Befestigungsabschnitt 23 vorgesehen, der gemäß den Figuren 3 und 4 unter Zwischenschaltung eines zumindest örtlich angeordneten elastischen Elementes 34 über eine seitliche Steckverbindung 35 mit der Führungsschiene 15 zusammenwirkt. Zusätzlich erfolgt in diesem Bereich eine Fixierung des Deformationselementes 18 an der Führungsschiene in Fahrzeugquerrichtung.

Der zweite Befestigungsabschnitt 23 umfaßt einen entweder an der Führungsschiene 15 oder am Deformationselement 18 angeordneten sich in Fahrzeugquerrichtung erstreckenden vorstehenden Haltesteg 36, der beidseitig von Schenkeln 37, 38 einer jeweils am anderen Bauteil ausgebildeten u-förmigen Aufnahme 39 umgeben ist. Zwischen dem Haltesteg 36 und der Innenseite der Aufnahme 39 ist das zumindest eine elastische Element 34 aus Gummi, Filz, Kunststoff oder dgl. zur Vermeidung von Geräuschen angeordnet.

Gemäß Fig. 2 sind der Haltesteg 36 am Deformationselement 18 und die u-förmige Aufnahme 39 an der Führungsschiene 15 ausgebildet. Bei dieser Ausführung erfolgt die Fixierung der Deformationselementes 18 in Querrichtung durch Befestigungsschrauben 40, die in aufgesteckte Blechmuttern 41 der Führungsschiene 15 von oben her eingedreht sind.

Gemäß den Figuren 3 und 4 sind der Haltesteg 36 an der Führungsschiene 15 und die u-förmige Aufnahme 39 am Deformationselement 18 vorgesehen. Die Fixierung des Deformationselementes 18 in Querrichtung erfolgt entsprechend Figur 3 durch eine von oben aufgesetzte Klemmleiste 42, die auf gleichgerichtete, außenseitig profilierte Stege 43, 44 der Führungsschiene 15 und des Deformationselementes 18 aufgesteckt ist. Die Klemmleiste 42 weist gegenüberliegende Lippenabschnitte 45, 46 auf, die die Führungsschiene 15 bzw. das Deformationselement 18 abschnittsweise verkleiden.

Gemäß Fig. 4 sind örtlich Blechklammern 47 zum Verbinden von Führungsschiene 15 und Deformationselement 18 vorgesehen. Die Blechkammern 47 umgreifen von oben und von der Seite her profilierte Stege 48, 49, von Führungsschiene 15 und Deformationselement 18.

Zur Abdeckung der Blechklammern 47 nach oben hin ist eine an der Führungsschiene festgelegte Abdeckleiste 50 vorgesehen, wobei sich eine endseitige Lippe 51 der Abdeckleiste 50 an der Außenseite des Bezugs 21 des Deformationselementes 18 abstützt.

Das Deformationselement 18 weist - im Querschnitt gesehen - angrenzend an den ersten Befestigungsabschnitt 22 einen etwa horizontalen, nach innen gerichteten ersten Wandabschnitt 29 auf, der etwa parallel zu einer Bodenwand 52 der Führungsschiene 15 ausgerichtet ist. Von diesem ersten Wandabschnitt 29 ist ein schräg nach innen und oben verlaufender zweiter Wandabschnitt 53 weggeführt, der über einen gebogenen Übergangsbereich 54 in einen etwa parallel zum ersten Wandabschnitt 29 ausgerichteten dritten Wandabschnitt 55 übergeht. Die dem Fahrgastraum 16 zugewandte Kontur des Deformationselementes 18 verläuft mit einem Abstand a zur Kontur der Führungsschiene 15, wobei dieser Abstand a als max. Deformationsweg bei einem Kopfaufprall zur Verfügung steht (Fig. 3 und 4).

## Patentansprüche

1. Kraftfahrzeug (1), insbesondere Personenkraftwagen, mit wenigstens einem großflächigen bewegbaren Dachteil (11), das an seitlich einer Dachöffnung (14) angeordneten langgestreckten Führungsschienen (15) geführt ist, wobei sich die Führungsschienen (15) benachbart von seitlich außenliegenden Dachholmen (10) erstrecken und sowohl die Dachholme (10) als auch die Führungsschienen (15) zum Fahrgastraum hin durch eine gemeinsame Verkleidung abgedeckt sind, wobei die Verkleidung (17) zumindest bereichsweise einem zwischengeschalteten Deformationselement (18) zugeordnet ist, welches an der Führungsschiene (15) festlegbar ist, **dadurch gekennzeichnet, daß** das Deformationselement (18) durch ein dünnwandiges Strangpressprofil (19) gebildet wird.

2. Kraftfahrzeug nach Anspruch 1, **dadurch gekennzeichnet, daß** das dünnwandige Strangpreßprofil (19) aus einer Leichtmetallegierung besteht.

3. Kraftfahrzeug nach den Ansprüchen 1 und 2, **dadurch gekennzeichnet, daß** das Strangpreßprofil (19) nach oben hin abschnittsweise offen ist und zusammen der Führungsschiene (15) ein geschlossenes Hohlprofil (20) bildet.

4. Kraftfahrzeug nach den Ansprüchen 1 bis 3, **dadurch gekennzeichnet, daß** das Deformationselement (18) an zumindest zwei beabstandet angeordneten Befestigungsabschnitten (22, 23) mit der Führungsschiene (15) verbindbar ist.

5. Kraftfahrzeug nach einem der vorangegangenen Ansprüche, **dadurch gekennzeichnet, daß** das Deformationselement (18) auf der dem Dachholm (10) zugewandten Seite einen nach oben und außen gerichteten ersten Befestigungsabschnitt (22) aufweist, wobei das freie Ende (24) des nach außen gerichteten Schenkels (25) unter Zwischenschaltung zumindest eines elastischen Elementes (26) seitlich in eine etwa u-förmige einseitig offene Aufnahme (27) der Führungsschiene (15) eingesteckt ist.

6. Kraftfahrzeug nach einem der vorangegangenen Ansprüche, **dadurch gekennzeichnet, daß** ein zweiter Befestigungsabschnitt (23) des Deformationselementes (18) unter Zwischenschaltung zumindest eines elastischen Elementes (34) über eine Steckverbindung (35) mit der Führungsschiene (15) verbunden ist und daß eine zusätzliche Fixierung des Deformationselementes (18) in Querrichtung zur Steckverbindung (35) an der Führungsschiene (15) erfolgt.

7. Kraftfahrzeug nach Anspruch 6, **dadurch gekennzeichnet, daß** die Fixierung in Querrichtung durch Befestigungsschrauben (40), eine Klemmleiste (42), durch Blechklammern (49) oder dergleichen erfolgt.

8. Kraftfahrzeug nach Anspruch 6, **dadurch gekennzeichnet, daß** entweder an der Führungsschiene (15) oder am Deformationselement (18) ein sich in Fahrzeugquerrichtung erstreckender vorstehender Haltesteg (36) ausgebildet ist, der beidseitig von Schenkeln (37, 38) einer jeweils am anderen Bauteil ausgebildeten u-förmigen Aufnahme (39) umgeben ist, wobei zwischen dem Haltesteg (36) und der Aufnahme (39) zumindest örtlich die elastischen Elemente (34) zwischengeschaltet sind.

9. Kraftfahrzeug nach Anspruch 6, **dadurch gekennzeichnet, daß** sowohl an der Führungsschiene (15) als auch am Deformationselement (18) aufrechte, nach oben ragende Stege (43, 44) ausgebildet sind, die durch eine aufgestreckte Klemmleiste (42) miteinander verbunden sind.

10. Kraftfahrzeug nach Anspruch 9, **dadurch gekennzeichnet, daß** die Klemmleiste (42) gegenüberliegende Lippenabschnitte (45, 46) aufweist, die die Führungsschiene (15) bzw. das Deformationselement (18) abschnittsweise verkleiden.

11. Kraftfahrzeug nach einem der vorangegangenen Ansprüche, **dadurch gekennzeichnet, daß** das Deformationselement (18) die Führungsschiene (15) zur Fahrzeugmitte hin bereichsweise überragt.

12. Kraftfahrzeug nach einem der vorangegangenen Ansprüche, **dadurch gekennzeichnet, daß** das Deformationselement (18) und die integrierte Verkleidung (17) angrenzend an einen ersten Befestigungsabschnitt (22) eine nach oben und zur Außenseite hin gerichtete Abstellung (30) aufweisen und daß zwischen einem auf den Dachholm (10) aufgesteckten Dichtkörper (32) und der Abstellung (30) eine Leiste (33) zwischengeschaltet ist, wobei die Leiste (33) einen Teil der Verkleidung (17) bildet.

## Claims

1. A motor vehicle (1), in particular a passenger vehicle, with at least one movable roof part (11) of large area which is guided on elongate guide rails (15) arranged at the side of a roof opening (14), wherein the guide rails (15) extend adjacent to roof spars (10) situated laterally on the outside and both the roof spars (10) and the guide rails (15) are covered towards the passenger compartment by a common covering (17), wherein the covering (17) is associated at least in part with an interposed deformation element (18) which is capable of being fixed to the guide rail (15), **characterized in that** the deformation element (18) is formed by a thin-walled extruded profile (19).

2. A motor vehicle according to Claim 1, **characterized in that** the thin-walled extruded profile (19) consists of a light metallic alloy.

3. A motor vehicle according to Claims 1 and 2, **characterized in that** the extruded profile (19) is open locally at the top and, together with the guide rail (15), it forms a closed hollow profile (20).

4. A motor vehicle according to Claims 1 to 3, **characterized in that** the deformation element (18) is capable of being connected to the guide rail (15) on at least two fastening portions (22, 23) arranged spaced from each other.

5. A motor vehicle according to any one of the preceding Claims, **characterized in that** on the side facing the roof spar (10) the deformation element (18) has a first fastening portion (22) directed upwards and outwards, wherein the free end (24) of the arm (25) directed outwards is inserted, with the interposition of at least one resilient element (26), laterally into a substantially U-shaped receiving means (27) of the guide rail (15), which receiving means (27) is open on one side.

6. A motor vehicle according to any one of the preceding Claims, **characterized in that** a second fastening portion (23) of the deformation element (18) is connected to the guide rail (15) by way of a plug-in connexion (35) with the interposition of at least one resilient element (34), and an additional fixing of the deformation element (18) to the guide rail (15) takes place in the transverse direction to the plug-in connexion (35).

7. A motor vehicle according to Claim 6, **characterized in that** the fixing in the transverse direction takes place by way of fastening screws (40), a clamping strip (42), by sheet-metal clips (49) or the like.

8. A motor vehicle according to Claim 6, **characterized in that** a projecting holding web (36), which extends in the transverse direction of the vehicle and which is surrounded on both sides by arms (37, 38) of a U-shaped receiving means (39) formed on the other component in each case, is formed either on the guide rail (15) or on the deformation element (18), wherein the resilient elements (34) are interposed at least locally between the holding web (36) and the receiving means (39).

9. A motor vehicle according to Claim 6, **characterized in that** upright webs (43, 44), which project upwards and which are connected to each other by an elongate clamping strip (42), are formed both on the guide rail (15) and on the deformation element (18).

10. A motor vehicle according to Claim 9, **characterized in that** the clamping strip (42) comprises opposed lip portions (45, 46) which locally cover the guide rail (15) and the deformation element (18) respectively.

11. A motor vehicle according to any one of the preceding Claims, **characterized in that** the deformation element (18) projects locally beyond the guide rail (15) towards the middle of the vehicle.

12. A motor vehicle according to any one of the preceding Claims, **characterized in that** the deformation element (18) and the incorporated covering (17) have a projection (30) directed upwards and towards the outside adjacent to a first fastening portion (22), and a strip (33) is interposed between a sealing member (32) placed on the roof spar (10) and the projection (30), wherein the strip (33) forms part of the covering (17).

## Revendications

1. Véhicule automobile (1), notamment voiture particulière, avec au moins une partie de toit (11) mobile à grande surface qui est guidée dans des rails de guidage (15) allongés disposés sur les côtés d'une ouverture du toit (14), dans lequel les rails de guidage (15) s'étendent à proximité de longerons de toit (10) placés à l'extérieur sur les côtés et aussi bien les longerons de toit (10) que les rails de guidage (15) sont recouverts par une garniture (17) commune vers l'habitacle du véhicule, dans lequel la garniture (17) est associée au moins par tronçons à un élément de déformation (18) intercalé qui peut être fixé au rail de guidage (15), **caractérisé en ce que** l'élément de déformation (18) est formé par un profilé extrudé (19) à paroi mince.

2. Véhicule automobile selon la revendication 1, **caractérisé en ce que** le profilé extrudé (19) à paroi mince est constitué d'un alliage léger.

3. Véhicule automobile selon les revendications 1 et 2, **caractérisé en ce que** le profilé extrudé (19) est ouvert vers le haut par tronçons et forme un profil creux fermé (20) conjointement avec le rail de guidage (15).

4. Véhicule automobile selon l'une quelconque des revendications 1 à 3, **caractérisé en ce que** l'élément de déformation (18) peut être raccordé avec le rail de guidage (15) dans au moins deux tronçons de fixation (22, 23) placés à distance l'un de l'autre.

5. Véhicule automobile selon l'une quelconque des revendications précédentes, **caractérisé en ce que**, du côté tourné vers le longeron de toit (10), l'élément de déformation (18) comporte un premier tronçon de fixation (22) orienté vers le haut et vers l'extérieur, l'extrémité libre (24) du montant (25) orienté vers l'extérieur étant insérée latéralement dans un logement (27) du rail de guidage (15) à peu près en forme de U, ouvert d'un côté, avec au moins un élément élastique (26) intercalé entre eux.

6. Véhicule automobile selon l'une quelconque des revendications précédentes, **caractérisé en ce qu'**un second tronçon de fixation (23) de l'élément de déformation (18) est raccordé avec le rail de guidage (15) par l'intermédiaire d'un connecteur (35) avec au moins un élément élastique (34) intercalé entre eux, et **en ce qu'**une fixation supplémentaire de l'élément de déformation (18) dans le rail de guidage (15) est réalisée dans le sens transversal par rapport au connecteur (35).

7. Véhicule automobile selon la revendication 6, **caractérisé en ce que** la fixation dans le sens transversal est réalisée au moyen de vis de fixation (40), d'une patte d'attache (42), d'attaches en tôle (49) ou d'un dispositif de ce genre.

8. Véhicule automobile selon la revendication 6, **caractérisé en ce qu'**une traverse de fixation (36) en saillie s'étendant dans la direction perpendiculaire au véhicule, qui est entourée de chaque côté par des montants (37, 38) d'un logement (39) en forme de U formé respectivement sur l'autre élément de construction, est prévue soit sur le rail de guidage (15) soit sur l'élément de déformation (18), les éléments élastiques (34) étant intercalés au moins localement entre la traverse de fixation (36) et le logement (39).

9. Véhicule automobile selon la revendication 6, **caractérisé en ce que** des traverses (43, 44) droites faisant saillie vers le haut, qui sont reliées l'une à l'autre par une patte d'attache (42) allongée, sont prévues aussi bien sur le rail de guidage (15) que sur l'élément de déformation (18).

10. Véhicule automobile selon la revendication 9, **caractérisé en ce que** la patte d'attache (42) comporte des tronçons à lèvres opposés (45, 46) qui enveloppent par tronçons le rail de guidage (15) ou l'élément de déformation (18).

11. Véhicule automobile selon l'une quelconque des revendications précédentes, **caractérisé en ce que** l'élément de déformation (18) fait saillie par tronçons au-dessus du rail de guidage (15) en direction du centre du véhicule.

12. Véhicule automobile selon l'une quelconque des revendications précédentes, **caractérisé en ce que** l'élément de déformation (18) et la garniture intégrée ( 17) comportent un décrochement (30) orienté vers le haut et vers le côté extérieur adjacent à un premier tronçon de fixation (22), et **en ce qu'**une patte (33) est intercalée entre un corps d'étanchéité (32) fixé sur le longeron de toit (10) et le décrochement (30), la patte (33) formant une partie de la garniture (17).
